# EUROPEAN PATENT APPLICATION

(11) **EP 1 372 116 A1**
(43) Date of publication of application: **17.12.2003**
(21) Application number: 03253604.7
(22) Date of filing: 06.06.2003
(51) Int. Cl.: G06T 11/00

(54) **Image processing method and system**

(30) Priority: 11.06.2002 FR 0207116
(71) Applicant: GE Medical Systems Global Technology Company LLC, Waukesha, Wisconsin 53188-1696 (US)
(72) Inventor: Poupon, Cyril, 91140 Villebon Sur Yvette (FR); Salazar-Ferrer, Pascal, 78460 Chevreuse (FR); Calmon, Guillaume, 75014 Paris (FR)
(74) Representative: Goode, Ian Roy

(57) **Abstract**

A method and system for processing images providing, together with the images, information relating to parameters associated with an object contained in the image. At least one region of interest in the object is selected. A man-machine interface (26,36) is formed between the object region of interest and an axis of symmetry of the object. Coordinates are computed (32,34) of the symmetry of the region of interest with respect to the axis of symmetry. The symmetric of the region of interest and associated information relating to the parameters are displayed (32,34,36) on the image of the object contained in the image. The system and method includes image acquisition and a consulting of the images. The image acquisition may be medical diagnostic images. The consulting of the images is connected to the image acquisition by a computer network.

## Description

The present invention relates to the field of image processing. More specifically, the invention relates to a digital image processing method and system, an imaging facility incorporating such a method and system.

The invention and embodiments thereof are applicable to the processing of images obtained by computer-aided tomography. However, the invention and embodiments thereof are also applicable to the modalities of processing of images obtained by magnetic resonance, ultrasound or X-rays.

The invention and embodiments thereof can be used to examine an object of interest, such as an organ or part of an organ, for example to examine the human brain, so that a practitioner can detect a tumor or a cancer at an early stage and can detect lesions relatively effectively, by comparing corresponding regions of two hemispheres of the brain.

Conventionally, this comparative examination is performed manually by identifying, in the examined organ, identical functional areas, and by comparing parameters associated with each of these areas. Such an analysis technique is relatively long and tedious to carry out. Furthermore, its accuracy is relatively mediocre in so far as the diagnostic parameters associated with these areas are linked to the extent of these areas as plotted by the practitioner.

One embodiment of the invention is a system for processing images. The system is intended to cooperate with a medical imaging facility capable of providing, together with the images, information relating to parameters associated with an object contained in the image or in each image.

An other embodiment of the invention is a method for processing digital images, the images being made up of image elements associated with information relating to or concerning parameters associated or related with an object contained in the image.

The invention will become apparent upon reading the following description with reference to the accompanying drawings in which:
Figure 1 is a schematic diagram of a digital imaging facility; and
Figures 2 to 5 illustrate the steps of the image processing method as implemented within the facility of Figure 1.

According to one aspect of the system, the system includes means for forming a man-machine interface for selecting at least one region of interest in the object and for generating an axis of symmetry of the object. Means for computing or calculating coordinates of the symmetric of the region of interest or each region of interest with respect to the axis of symmetry; and means for displaying, on the image of the object contained in the image, the symmetric of the region of interest or each region of interest and associated or corresponding information relating or concerning the parameters.

In an embodiment of the system, the means for computing or calculating includes means for forming the axis of symmetry of the object from points inputted via the means for forming the man-machine interface.

An embodiment of the invention is an imaging facility, including a means for image acquisition that is capable of providing, together with the images, information relating to or concerning parameters associated with or relating to an object contained in the image or each image, and which is connected to a means for consulting or browsing images.

In an embodiment of the facility, the facility additionally includes a means for processing an image, including means for forming the man-machine interface for selecting at least one region of interest in the object contained in the image provided by the means for image acquisition and for generating an axis of symmetry of the object, means for computing or calculating coordinates of the symmetric of the region of interest or each selected region of interest with respect to the axis of symmetry of the object; and means for displaying, on the image of the object contained in the image, the symmetric of the region of interest or each region of interest and associated or corresponding information relating to the parameters.

The means for image processing can be contained in the means for image acquisition or in the means for image consulting or browsing. For example, the means for consulting or browsing can be connected to the means for image acquisition via a computer network.

In one embodiment, the method includes the steps according to which at least one region of interest corresponding to an object to be examined is selected in an image, an axis of symmetry of the object is generated, the coordinates of the image of the region of interest with respect to the axis of symmetry are computed, and the symmetric of the region of interest or each region of interest and information relating to the parameters are presented on the image of the object.

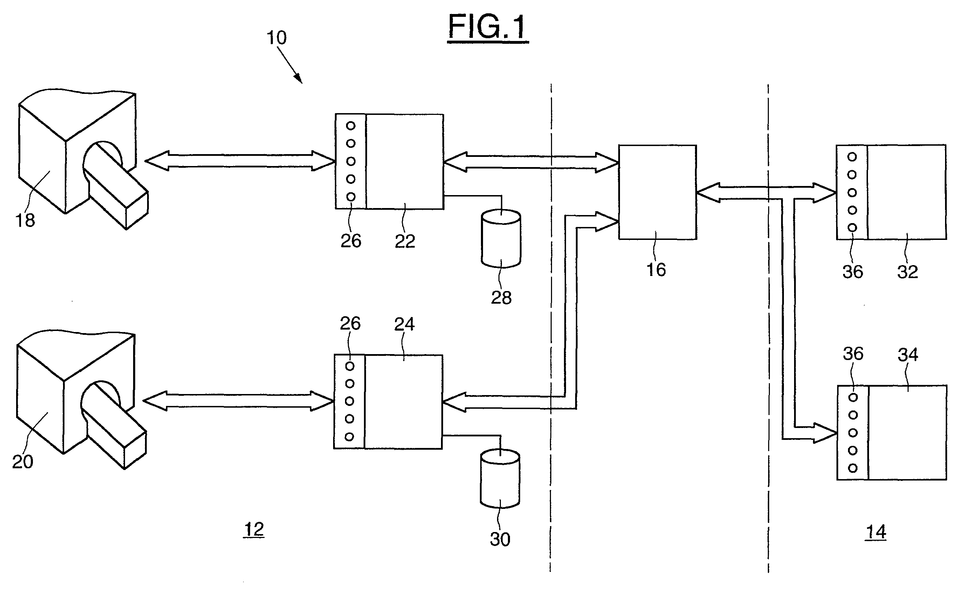

Figure 1 illustrates a medical imaging facility 10. The facility 10 can be installed in a radiology department of, for example, a hospital. The facility 10 includes two functional areas: a means for image acquisition 12 intended to be placed in an image acquisition room, and a means for image consultation or browsing 14, intended to be placed in a "review" room.

The means for image acquisition 12 and the means for consultation or browsing 14 communicate via a network 16 internal to the site equipped with the imaging facility 10. The network 16 is a conventional, intranet-type, computer network for transmitting information between the means for acquisition 12 and the means for consultation or browsing 14 within the site. The network 16 can also be an Internet-type computer network for transmitting information between different sites.

As is conventional, the means for image acquisition 12 includes at least a set of conventional means for medical diagnostic imaging, such as 18 and 20, comprising, for example computer-aided tomography or magnetic resonance, ultrasound, X-ray, etc. imaging apparatus.

The means 18 and 20 are connected to respective image acquisition consoles, 22 and 24, each of which is provided with a man-machine interface 26 for, as is known per se, adjusting imaging parameters such as exposure parameters, inputting image identification information or, generally, controlling and monitoring operation of the means for imaging 18 and 20. Each of the acquisition consoles 22 and 24 is provided with a database, 28 and 30 respectively, in which the images provided by the means for imaging 18 and 20 are loaded. For example, these images are presented in the form of files, each file corresponding to a patient or an object, and the files, for example, are organized in the form of directories grouping together various types of analyses carried out.

The means for image acquisition 12, and in particular the acquisition consoles 22 and 24, is connected via the network 16 to the means for consultation 14. The means for consulting 14 comprises a set of consultation consoles, such as 32 and 34, that are provided with a man-machine interface 36, and able to be operated by a practitioner to query the databases 28 and 30 in order to retrieve the images stored therein.

As is known per se in the field of imaging technology, the images provided by the means for imaging 18 and 20, and processed by the acquisition consoles 22 and 24, are presented in the form of image elements with which information relating or concerning medical imaging parameters is linked or associated. Such parameters can be different in nature according to the imaging protocol used. Thus, for example, the diagnostic parameters may be formed by the average mobility of water molecules, the perfusion of blood, the haematoencephalic barrier permeability, etc. These parameters are each associated with a numerical or digital value. A functional map, grouping together a list of parameters selected by the practitioner via the man-machine interface 26 and the corresponding numerical values, is thus created. The functional map may include statistical data associated with the parameters that it contains, such as incrementation or growth of the parameter, its mean value, its standard deviation, etc.

To consult or browse images using the consultation consoles 32 and 34, the practitioner selects for example, for each patient or object, the images for that patient or object. These images are extracted from the databases 28 and 30, and then delivered via the computer network 16 to the consoles 32 or 34 to be displayed. Using the man-machine interface 36, the practitioner then selects a region of interest by drawing or tracing a contour using the interface 36 on the image itself. After selecting the region of interest, the parameters of the functional map corresponding to the region are displayed on a screen.

Furthermore, the imaging facility 10 includes means for processing images, e.g., software, enabling a comparative analysis of the region of interest displayed on the screen of the consultation console 32 or 34. The means for processing can be distributed within the means for image acquisition 12 and/or within the means for consultation 14, or can be installed either in the means for acquisition 12, and in particular in the acquisition consoles 22 and 24, or in the consultation consoles 32 and 34. The means for processing images enables the creation of a symmetric region of interest of the region of interest selected by the practitioner, with respect to the general axis of symmetry of the object or examined organ or the examined organ part, and enables, for the image region of interest, the parameters of the functional map corresponding to the selected region of interest to be displayed.

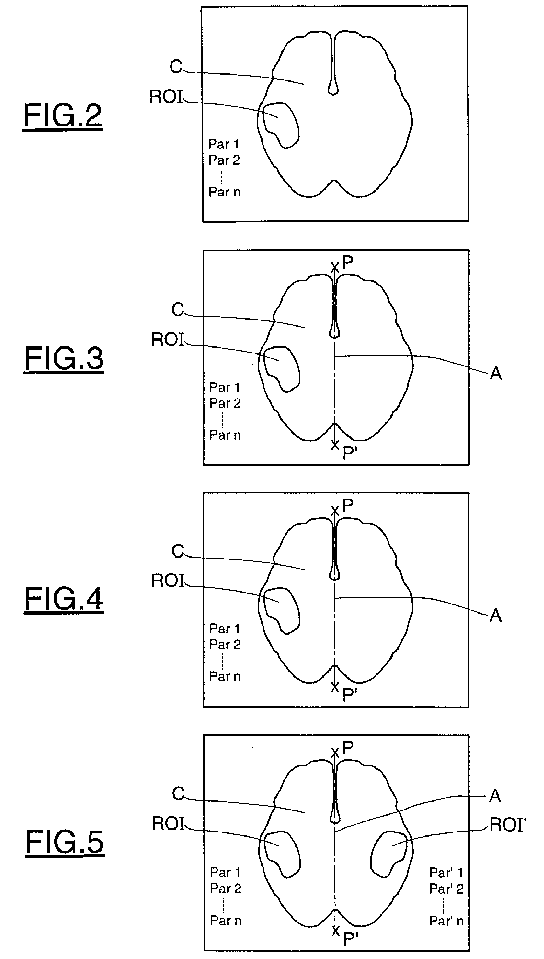

Figures 2 to 5 are screen images from the consultation console 32 or 34 representing the displayed image of a human brain, based on a configuration according to a region of interest ROI of the image of the brain C that has been selected by the practitioner, and according to which a functional map grouping the values Par 1, Par 2 ... Par n of medical diagnostic parameters is displayed on the screen. The practitioner can request a symmetric region of interest ROI' of the selected region of interest ROI to be elaborated and the corresponding parameters of the functional map to be obtained for this image region of interest.

Referring to Figure 3, the practitioner, using the man-machine interface 36, manually selects two points P and P' to generate an axis of symmetry A for the brain C. The practitioner selects points P and P' such that the axis of symmetry A is along the interhemispheric fissure of the brain C. A computation algorithm then proceeds to calculate the equation of the axis of symmetry A and the equation of the region of interest ROI.

Referring to Figure 4, the practitioner selects, from the previously selected regions of interest, the region of interest ROI for which the image region of interest ROI' should be computed. In the example, only one region of interest is drawn by the practitioner. Thus, in this case, the selected region of interest corresponds to the region of interest drawn by the practitioner.

Referring to Figure 5, the computation algorithm proceeds to calculate the equation of the contour of the region of interest ROI' and then displays this region of interest. The calculation then retrieves the values Par' 1, Par' 2 ... Par' n of the functional map corresponding to this image region of interest, and then automatically displays these values on the screen of the console 32 or 34.

Thus, by comparing the values of the functional map of the region of interest ROI selected by the practitioner and of the image region of interest, the practitioner can detect any anomaly in the tissues examined.

## Claims

1. A system for processing images providing, together with the images, information relating to parameters associated with an object contained in the image or each image comprising:
means (26, 36) for forming a man-machine interface for selecting at least one region of interest (ROI) in the object and for generating an axis of symmetry (A) of the object;
means (32, 34) for computing coordinates of the symmetric of the region of interest or each region of interest with respect to the axis of symmetry; and
means (32, 34, 36) for displaying, on the image of the object contained in the image, the symmetric of the region of interest or each region of interest and associated information relating to the parameters.

2. The system according to claim 1 wherein the means (32, 34) for computing comprises:
means for forming the axis of symmetry of the object from points inputted via the man-machine interface.

3. An imaging facility comprising:
means for image acquisition system (12, 18, 20), which is capable of providing, together with the images, information relating to parameters associated with an object contained in the image or each image;
means (14) for consulting images connected to the means for image acquisition; means for image processing system (32, 34);
means for forming a man-machine interface (36) for selecting at least one region of interest (ROI) in the object contained in the image provided by the means for image acquisition system and for generating an axis of symmetry (A) of the object;
means for computing coordinates of the symmetric of the region of interest or each selected region of interest with respect to the axis of symmetry of the object; and
means for displaying, on the image of the object contained in the image, the symmetric of the region of interest or each region of interest and associated information relating to the parameters.

4. The facility according to claim 3 wherein the means for image acquisition (12, 18, 20) comprises:
means (18, 20) for imaging that is connected to a respective image acquisition console (22, 24) via respective means for forming a man-machine interface.

5. The facility according to claim 3 wherein the means for consulting images comprising;
a console (32, 34) provided with the man-machine interface (36) and operable to query a database (28, 30) of stored images.

6. The facility according to claim 3 wherein the means for image acquisition (12) and the means (14) for consulting images are disposed in separate sites in the facility.

7. The facility according to claim 3 wherein the image processing system is contained in the image acquisition system.

8. The facility according to claim 3 wherein the means for image processing is contained in the means for consulting images.

9. The facility according to any of claims 1 to 8 wherein the means for consulting images is connected to the means for image acquisition via a computer network.

10. A method for processing images made up of image elements associated with information relating to parameters associated with an object contained in the image comprising:
generating in a selected image an axis of symmetry (A) of the object according to which at least one region of interest (ROI) corresponding to an object to be examined;
computing the coordinates of the image of the region of interest with respect to the axis of symmetry; and
displaying on the image of the object the symmetric (ROI') of the region of interest or each region of interest and information relating to the parameters.
